# EUROPEAN PATENT SPECIFICATION

(11) **EP 2 714 228 B1**
(45) Date of publication and mention of the grant of the patent: **05.05.2021**
(21) Application number: 12730670.2
(22) Date of filing: 01.06.2012
(51) Int. Cl.: B01D 19/00, B01D 21/00, B01D 45/00, E03F 5/14, B01D 21/24, B01D 21/02, F24D 19/00, F24D 19/08

(54) **REMOVAL DEVICE FOR DIRT PARTICLES AND/OR GAS BUBBLES**
VORRICHTUNG ZUR ENTFERNUNG VON SCHMUTZPARTIKELN UND/ODER GASBLASEN
DISPOSITIF D'ÉLIMINATION DE PARTICULES DE SALETÉ ET/OU DE BULLES DE GAZ

(30) Priority: 01.06.2011 NL 2006887
(43) Date of publication of application: 09.04.2014
(73) Proprietor: Flamco B.V., 3751 LJ Bunschoten (NL)
(72) Inventor: CNOSSEN, Jan Henk, 8723 CP Koudum (NL); DEVLIN, Terence Arthur, 7312 AP Apeldoorn (NL)
(74) Representative: EP&C
(86) International application number: PCT/NL2012/050388
(87) International publication number: WO 2012/165965

(56) References cited:
- EP-A1- 2 266 676
- WO-A1-2010/107304
- WO-A1-2011/037465
- US-A1- 2008 110 344

## Description

### Field of the invention

The present invention relates to a removal device for removing dirt particles and/or gas bubbles from a liquid in a liquid conduit system.

### Background and prior art

In the prior art, removal devices for removing dirt particles and/or gas bubbles from a liquid in a liquid conduit system are known. An example is WO2011/037465A1 by the current applicant.

These removal devices are typically used in heating systems of buildings and houses. The removal device has a function of removing small dirt particles and/or gas bubbles from the liquid, generally water, which flows through the conduit system. This allows the system to continue to function over a relatively long period of time.

The removal devices may also be used in other applications, for instance in industrial applications.

The device of WO2011/037465A1 works, but ongoing research has created further improvements relating to the size and/or efficiency and/or hydraulic characteristics of the removal device.

Document WO2008/060741 discloses a deaeration device for deaerating coolant fluid flow in a recirculation cooling system, where the recirculation cooling system includes a cooling fluid reservoir adapted to receive the deaeration device submerged within cooling fluid therein, includes an elongated deaeration tube including a fluid outlet and a deaerating skimming shaped slot for skimming air bubbles and cooling fluid from cooling fluid flow flowing through the deaeration tube, and including a fluid inlet for allowing the same amount of fluid that is skimmed off and removed through the top fluid outlet to re-enter the deaeration tube to maintain mass balance in the cooling fluid flow.

The deaeration device discloses a device with a housing, a quite zone and a main inner channel defined by a tube. Document WO2008/060741 does not disclose an entry to a branch flow channel which is provided as a gap which surrounds the main inner channel.

### The invention

A removal device is provided for removing dirt particles and/or gas bubbles from a liquid in a liquid conduit system according to claim 1.

In an embodiment, the at least one branch flow channel extends substantially parallel to the main inner channel over a first distance.

In an embodiment, - when viewed in the direction of the main inner channel - the at least one branch flow channel extends around at least a substantial part of the circumference of the main inner channel over said first distance.

In an embodiment, the at least one return flow channel extends substantially parallel to the main inner channel over a second distance.

The main inner channel is defined by a tube which has a smaller cross-section than a cross-section of the entry. The tube which defines the main inner channel has a diameter which is smaller than a diameter of the entry. The tube extends between the branch location and the merge location (or merge point).

In an embodiment, - when viewed in the direction of the main inner channel - the at least one return flow channel extends around at least a substantial part of the circumference of the main inner channel over said second distance.

In an embodiment, a sum of the first distance and second distance is greater than a length of the main inner channel inside the housing.

In an embodiment - when viewed in the direction of the main inner channel - the branch flow channel and the return flow channel are located on different sides of the main inner channel.

In an embodiment, the branch flow channel and the return flow channel have a substantially semi-annular form, extending around about half of the circumference of the main inner channel, the branch flow channel and the return flow channel being located on opposite sides of the main inner channel, when viewed in the direction of the inner ongoing flow channel.

In an embodiment, the branch flow channel comprises an energy dissipation chamber downstream of the branch location.

In an embodiment, the branch flow channel and the return flow channel have substantially a same size and form, but are substantially mirrored with respect to a center point of the main inner channel.

In an embodiment, the branch flow channel has an exit which opens into the quiet zone, wherein - in use - the branch flow exits the branch flow channel and enters the quiet zone, and wherein the return flow channel has an entrance through which in use the branch flow exits the quiet zone and enters the return flow channel, and wherein the exit of the branch flow channel is located closer to the exit than the entrance of the return flow channel, and wherein the entrance of the return flow channel is located closer to the entry than the exit of the branch flow channel.

In an embodiment, the housing, when viewed in the direction of the main inner channel, is asymmetric, wherein a greater part of the housing is provided on one side of the main inner channel, and a smaller part of the housing is provided on an opposite side of the housing, allowing installation of the removal device close to a wall by providing said opposite side at said wall.

In an embodiment, the wall of the housing at at least one side is substantially flat.

In an embodiment, a wall of the housing comprises:
- a first substantially flat dirt discharge mounting zone constructed to allow the mounting of a dirt particles discharge to said housing, wherein the first dirt discharge mounting zone is provided at a lowest point of the housing when the removal device is mounted in a substantially horizontal orientation,
- a second substantially flat dirt discharge mounting zone constructed to allow the mounting of a dirt particles discharge to said housing, wherein the second dirt discharge mounting zone is provided at a lowest point of the housing when the removal device is mounted in a substantially vertical orientation,
   and/or
- a first substantially flat gas discharge mounting zone constructed to allow the mounting of a gas discharge to said housing, wherein the first gas discharge mounting zone is provided at a highest point of the housing when the removal device is mounted in a substantially horizontal orientation,
- a second substantially flat gas discharge mounting zone constructed to allow the mounting of a dirt particles discharge to said housing, wherein the second gas discharge mounting zone is provided at a highest point of the housing when the removal device is mounted in a substantially vertical orientation.

In an embodiment, an exit of the branch flow channel and an entrance of the return flow channel are provided on opposite sides of the main inner channel, wherein a branch flow trajectory through the quiet zone which extends between the exit of the branch flow channel and the entrance of the return flow channel crosses the main inner channel, when viewed in a direction perpendicular to the main inner channel.

The present disclosure further relates to a removal member configured to be fitted in a housing, the removal member comprising:
- a main inner channel, having an entry and an exit at opposite ends, wherein the main inner channel comprises a tube having a cross-section which is smaller than a cross-section of the entry and a diameter which is smaller than a diameter of the entry, and wherein the tube extends between a branch location and a merge location,
- at least one branch flow channel defined by a branch flow wall, which branches off from the main inner channel at a branch location and extends to a branch flow channel exit, the branch flow channel being configured to - in use - branch off a relatively small portion from a main flow which flows through the main inner channel,
- at least one return flow channel defined by a return flow channel wall, the return flow channel configured for a return flow back to the main inner channel, wherein the return flow channel extends between a return flow channel entrance to a merge point where the return flow channel merges with the main inner channel,
wherein an entry to the branch flow channel is provided as a gap which surrounds the main inner channel.

In an embodiment, the at least one branch flow channel extends substantially parallel to the main inner channel over a first distance.

In an embodiment, - when viewed in the direction of the main inner channel - the at least one branch flow channel extends around at least a substantial part of the circumference of the main inner channel over said first distance.

In an embodiment, the at least one return flow channel extends substantially parallel to the main inner channel over a second distance.

In an embodiment, - when viewed in the direction of the main inner channel - the at least one return flow channel extends around at least a substantial part of the circumference of the main inner channel over said second distance.

In an embodiment, - when viewed in the direction of the main inner channel - the branch flow channel and the return flow channel are located on different sides of the main inner channel.

In an embodiment, - when viewed in the direction of the inner ongoing flow channel - the branch flow channel and the return flow channel have a substantially semi-annular form, extending around about half of the circumference of the main inner channel, the branch flow channel and the return flow channel being located on opposite sides of the main inner channel.

The present invention further relates to a method of converting an existing removal device for removing dirt particles and/or gas from a flow of liquid in a liquid conduit system into a removal device according to any of claims 1-11.

The present disclosure further relates to a removal device for removing dirt particles and/or gas bubbles from a liquid in a liquid conduit system, the removal device comprising:
- a housing having an entry and an exit, the housing defining an inner space within the housing,
- a main inner channel constructed to guide a main flow through the inner space from the entry to the exit, wherein a wall of the housing comprises:
   ∘ a first and a second mounting zone for mounting a gas discharge and a dirt discharge when the main inner channel extends substantially horizontally, the first and second mounting zones being provided in an uppermost part and a lowermost part of the housing when the main inner channel extends substantially horizontally, and
   ∘ a third and a fourth mounting zones for mounting a gas discharge and a dirt discharge when the main inner channel extends substantially vertically, the third and fourth mounting zones being provided in an uppermost part and a lower most part of the housing when the main inner channel extends substantially vertically.

In an embodiment of the disclosure, the removal device comprises:
- a first substantially flat dirt discharge mounting zone constructed to allow the mounting of a dirt particles discharge to said housing, wherein the first dirt discharge mounting zone is provided at a lowest point of the housing when the removal device is mounted in a substantially horizontal orientation,
- a second substantially flat dirt discharge mounting zone constructed to allow the mounting of a dirt particles discharge to said housing, wherein the second dirt discharge mounting zone is provided at a lowest point of the housing when the removal device is mounted in a substantially vertical orientation,
   and/or
- a first substantially flat gas discharge mounting zone constructed to allow the mounting of a gas discharge to said housing, wherein the first gas discharge mounting zone is provided at a highest point of the housing when the removal device is mounted in a substantially horizontal orientation,
- a second substantially flat gas discharge mounting zone constructed to allow the mounting of a gas discharge to said housing, wherein the second gas discharge mounting zone is provided at a highest point of the housing when the removal device is mounted in a substantially vertical orientation.

### List of figures

The previous and other features and advantages of the present invention will be more fully understood from the following detailed description of exemplary embodiments with reference to the attached drawings. Like reference numerals refer to like parts.
Figure 1 shows a perspective view of a removal device according to the invention.
Figure 2 shows a perspective view of a removal device according to the invention with a cut away part.
Figure 3 shows a perspective view of a removal member according to the present disclosure.
Figure 4 shows a perspective view of a removal member in combination with different housings according to the prior art.
Figure 5 shows a side view or top view - depending on the orientation - of the removal device according to the invention.
Figure 6 shows a section in side view or top view - depending on the orientation - of the removal device according to the invention.
Figure 7 shows a section in another side view of the removal device according to the invention.
Figure 8 shows a section in side view of the removal device according to the invention in use.

### Detailed description of the figures

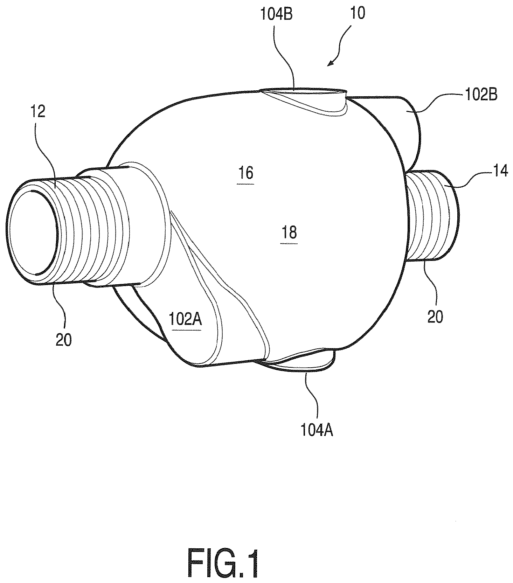

With reference to figure 1, a removal device 10 is provided. The removal device 10 comprises an entry 12, an exit 14 and a housing 16. The housing 16 is defined by a housing wall 18. The entry 12 and exit 14 are provided with thread 20, for coupling with a liquid conduit system. Other kinds of couplings are also possible.

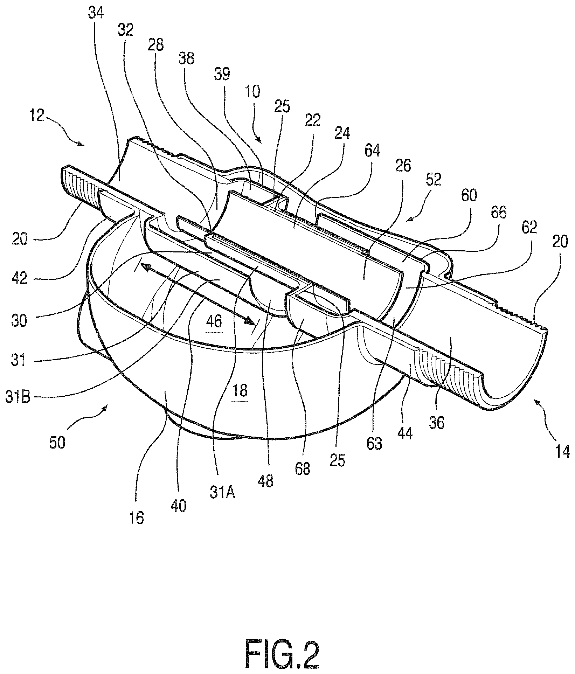

With reference to figures 2 - 8, the removal device comprises a main inner channel 22 which is defined by a tube 24. The main inner channel 22 is substantially straight.

The tube 24 has a diameter which is smaller than a diameter of the entry.

The housing 16 defines an inner space 46. The housing 16 is provided with an extension 42 at the entry and an extension 44 at the exit.

The tube 24 is circular, but other forms may be possible.

At a branch location 28, a branch flow channel 30 branches off from the main inner channel 22. An entry 32 to the branch flow channel 30 is provided as a gap which surrounds the main inner channel 22. The circumferential gap has an advantage in that there is minimal risk of clogging of the gap due to trapped dirt particles.

Other forms of the entry 32 are also possible, for instance holes in the tube 24. The gap occurs due to the difference in diameter between the tube 24 and the entry 12. The tube 22 is separate from a tube 34 at the entry 20 and a tube 36 at the exit 14. Together, the tubes 34, 22, and 36 define the main flow channel 26 between the entry 12 and the exit 14.

An energy dissipation chamber 38 is provided in the branch flow channel just downstream of the entry 32 to the branch flow channel 30. The energy dissipation chamber 38 is defined by a wall 39 and is constructed to lower the velocity of the branch flow by dissipating energy from the branch flow.

The energy dissipation chamber 38 has an annular form and surrounds the entire main inner channel 22.

The energy dissipation chamber 38 goes over in the branch flow channel 30 which is defined by a branch flow channel wall 31. The branch flow channel wall 31 comprises an inner wall 31A which engages the tube 24 and an outer wall 31 B.

The branch flow channel 30 extends parallel to the main inner channel over a length 40.

The exit 48 of the branch flow channel had a rounded form to guide the branch flow. The entrance 64 to the return flow channel also has a rounded form to guide the return flow.

The branch flow channel 30 has an exit 48.

The branch flow channel 30 has a semi-annular form and extends around 180 degrees, i.e. about half, of the circumference of the main inner channel 22. A somewhat different form is also possible.

The greatest part of the volume of the inner space 46 is provided on one side 50 of the main inner channel 22. This has an effect that the at the opposite side 52, the main inner channel 22 lies relative close to the wall 18 of the housing 16. This allows installation of the removal device 10 in a situation where a conduit lies close to an external obstruction, for instance a wall of a house or building. A part of the wall 18 at the opposite side may be substantially flat.

A return flow channel 60 is provided which comprises an entrance 64. The return flow channel 60 is defined by a wall 66. The return flow channel extends parallel to the main inner channel 22 and surrounds the main inner channel 22 over about 180 degrees.

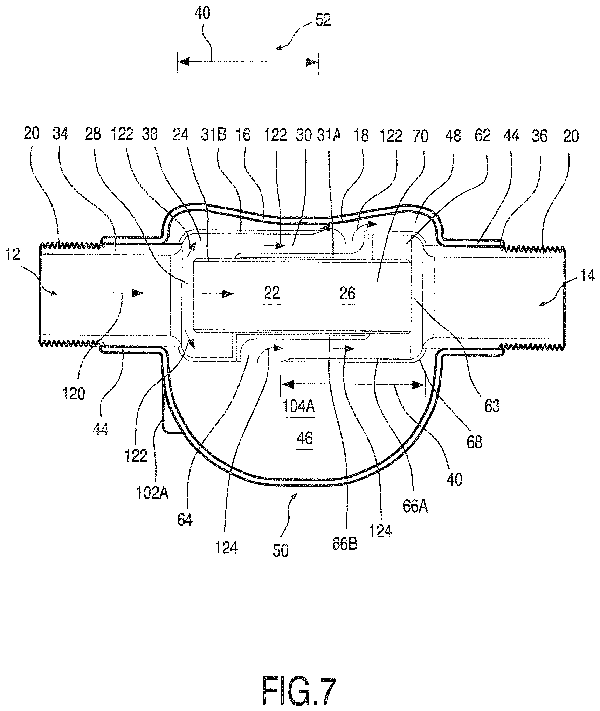

Turning to figure 7, the return flow channel 60 extends parallel to the main inner channel over a length 40. The return flow channel has the same length as the length 40 of the branch flow channel.

The branch flow channel 30 and the return flow channel 60 are substantially mirrored about a center point 70 of the removal device 10. The center point 70 is shown in figure 7.

This has an advantage that the entry 12 and the exit 14 are interchangeable. This allows a free choice of flow direction, and prevents a wrong installation.

The return flow channel 60 also comprises an energy dissipation chamber 62. A return opening 63 is provided as a gap between the tube 24 and the tube 36.

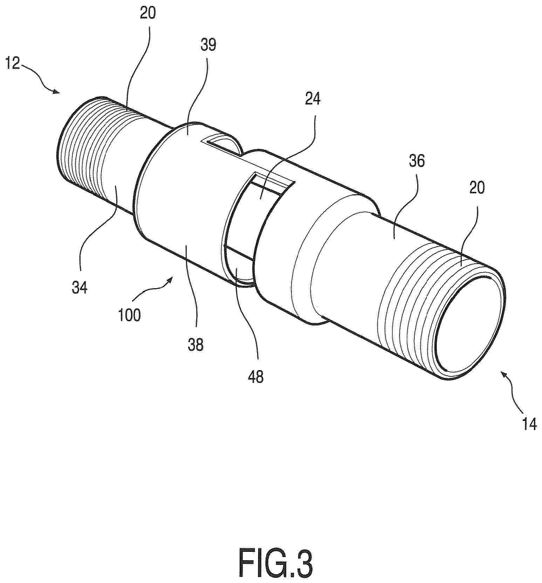

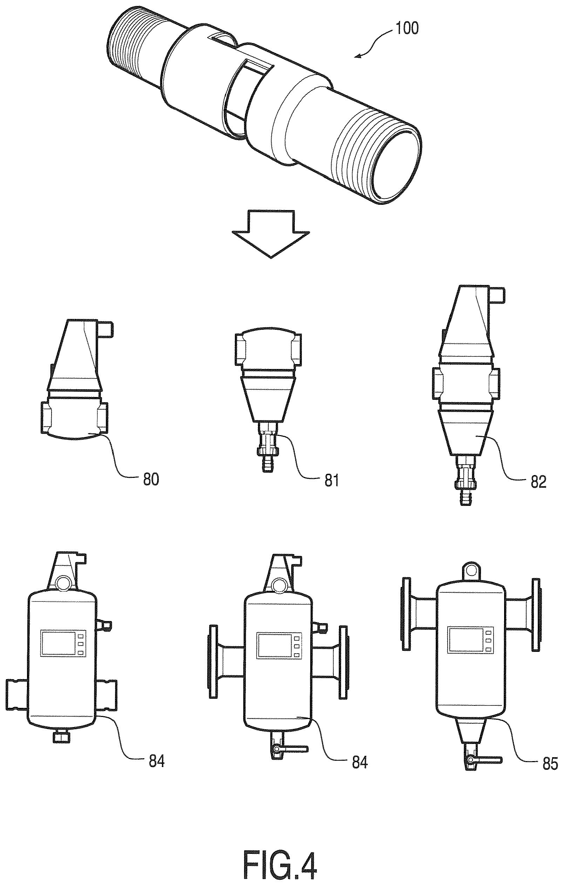

Turning to figures 3 and 4, it is shown that the internal part 100 of the removal device, i.e. a removal member 100 can integrally be disconnected from the housing. The removal member 100 can be provided separately and can be mounted in other housings than the housing shown in figure 1.

For instance, the removal member 100 can be mounted in existing types of removal devices 80, 81, 82 for removing gas from liquids or in an existing type of a removal device for removing dirt particles and gas. In this way, older types of removal devices 80, 81, 82, 84, which are already installed, can be upgraded and provided with an improved performance.

The removal member 100 can also be mounted in existing type of removal devices 85 for dirt particles.

The removal member 100 comprises the tube 34 which is connected to the wall 39 of the energy dissipation chamber 38. The wall 39 of the energy dissipation chamber is connected to the wall 31 of the branch flow channel 30. The wall 39 of the energy dissipation chamber is connected to the tube 24 via a bridging section 25 (shown in figure 1). The tube 24 is connected to the wall 66 of the return flow channel 60 and to the wall 68 of the energy dissipation chamber 62. The wall 68 of the energy dissipation chamber 62 is connected to the tube 36. In this way, the parts of the removal member 100 are connected to one another and the removal member 100 becomes one device that can be installed in exiting types of removal devices, see figure 4.

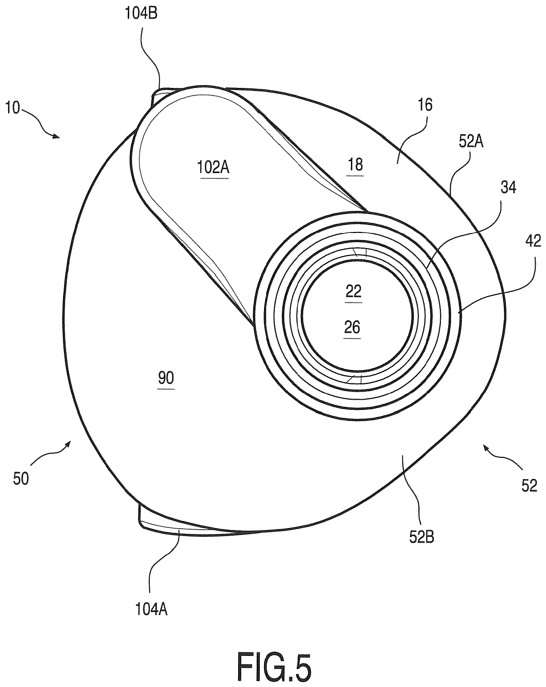

Turning to figure 5, it is shown that the larger portion of the housing 16 is located eccentrically on one side of the main inner channel 22. The housing on the side 52 is suitable to face a wall of a house or building. The sides 52A, 52b extend at a substantially right angle to one another. This may allow the removal device 100 to be positioned such that the side 52A faces a floor or a ceiling and the side 52B faces a wall which extends at a right angle to the wall or ceiling. This allows a space efficient installation of the removal device 100.

On the housing 16, substantially flat surfaces 102A, 102B and 104A, 104B are provided. These surfaces provide mounting surfaces for a gas valve and a dirt discharge.

If the removal device is installed vertically, i.e. with the main inner channel 22 extending vertically or substantially vertically, the surface 102A may be used to install a dirt discharge and the surface 102B may be used to install a gas discharge. Dirt and gas discharges are known in the field of the art.

If the removal device 100 is installed horizontally, i.e. with the main inner channel 22 extending substantially horizontally, the mounting surfaces 104A, 104B can be used to mount a gas discharge and a dirt discharge.

The two mounting surfaces 102A, 102B are provided in an uppermost part and a lower most part of the housing 16 when the main inner channel extends substantially vertically, and the two mounting surfaces 104A, 104B are provided in an uppermost part and a lower most part of the housing 16 when the main inner channel extends substantially horizontally.

The surfaces 102A, 102B on the one hand and the surfaces 104A, 104B on the other hand extend at right angles to one another.

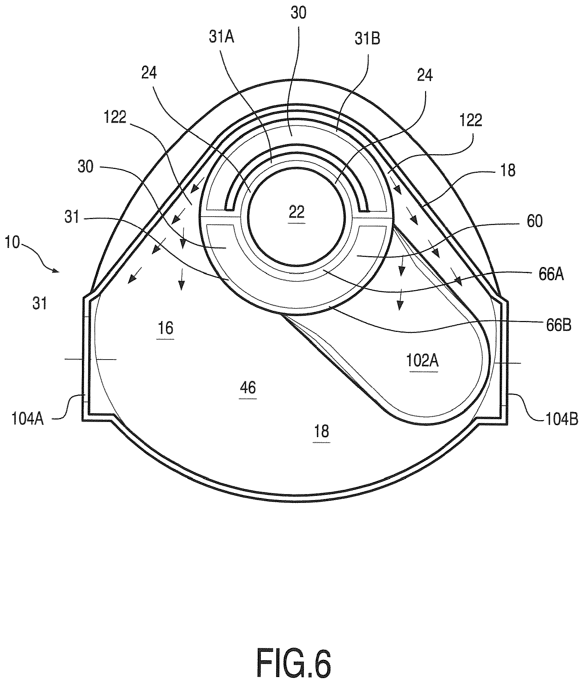

Turning to figure 6, the walls 31, 66 which define the branch flow channel 30 and the return flow channel 60 are shown. Each wall has an inner part 31A, 66A, and an outer part 31B, 66B.

The channels 30, 60 extend on opposite side of the main inner channel 22 and extend around 180 degrees of the main inner channel 22.

The removal member 100 is secured to the housing 16 via contact between the extensions 44 and the respective tubes 34, 36.

One advantage of the present invention is that it allows a relatively compact removal device. In use, the removal device has a relatively low resistance, i.e. a relatively low pressure drop. The removal device is relatively efficient, i.e. the removal device removes dirt particles and/or gas bubbles from the passing liquid quite well.

### Use

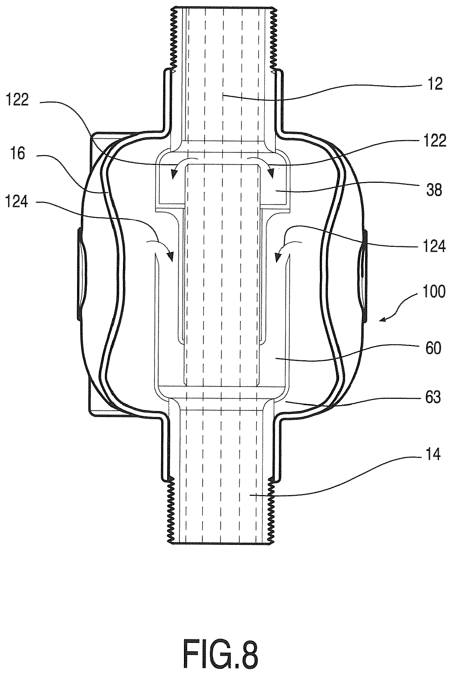

Turning to Figures 7 and 8, a main flow 120 enters the removal device through the entry 12 and flows in the direction of exit 14. A small branch flow 122 will branch off from the main flow 120 through the entrance 28 of the branch flow channel 30 at the branch location. The greater part of the main flow 120 continues through the main inner channel 22.

The branch flow 122 is an outer part of the main flow, which is caused by the smaller diameter of the tube 24. Because the entry 32 extends around the main channel, the parts of the main flow which comprise relatively a lot of gas bubbles, i.e. an upper part of the main flow, and the part of the main flow which comprises relatively a lot of dirt particles, i.e. a lower portion, are branched off.

The branch flow enters the energy dissipation chamber 38, where the velocity is reduced by dissipating energy via turbulence. The branch flow 122 then continues through the branch flow channel 30 and reaches the exit 48 of the branch flow channel.

The branch flow flows through the exit 48 and enters the quiet zone. The velocity is further reduced, because the quiet zone provides a greater cross-sectional area than the branch flow channel 30.

The branch flow 122 flows around the outer walls 31B, 61B to the other side of the removal member 100. When seen in a view perpendicular to the main inner channel 22, the flow in the quiet zone traverses the main inner channel. The branch flow 122 inside the quiet zone may also have a component that is opposite to the direction of the main flow 120 in the main inner channel 22. In other words, the exit 48 of the branch flow channel 30 may be located downstream of the entry 64 of the return flow channel 60, when related to the main flow 120 inside the main inner channel 22.

Here, the velocity is low enough for dirt particles to settle and gas bubbles to rise.

The branch flow 122 subsequently enters the return flow channel 60 via the entrance 64. The branch flow is now referred to as a return flow 124. The return flow 124 flows through the energy dissipation chamber 62 and returns in the main flow channel 126 via the opening 63. Here, the return flow merges with the main flow.

It will be obvious to a person skilled in the art that the details and the arrangement of the parts may be varied without departing from the scope of the claims.

## Claims

1. Removal device (10) for removing dirt particles and/or gas bubbles from a flow of liquid in a liquid conduit system, the removal device (10) comprising:
- a housing (16) having an entry (12) and an exit (14), the housing (16) defining an inner space (46) within the housing (16),
- a main inner channel (22) constructed to guide a greater part of the flow through the inner space (46) from the entry (12) to the exit (14), wherein the main inner channel (22) comprises a tube (24) having a cross-section which is smaller than a cross-section of the entry (12) and a diameter which is smaller than a diameter of the entry (12), and wherein the tube (24) extends between a branch location and a merge location,
- at least one branch flow channel (30), which branches off from the main inner channel (22) at the branch location, the branch flow channel (30) being configured to - in use - branch off a smaller part of the main flow,
- at least one quiet zone in the inner space (46), wherein in use the at least one branch flow channel (30) discharges into the at least one quiet zone, the quiet zone being constructed and arranged so that in use, a velocity of the liquid in the at least one quiet zone is lower than in the main inner channel (22) and low enough to allow:
∘ dirt particles to settle in the at least one quiet zone and/or
∘ gas bubbles to form and rise in the at least one quiet zone,
- at least one return flow channel (60) for a return flow from the at least one quiet zone, wherein the return flow channel (60) merges with the main inner channel (22) at the merge location,
wherein an entry (32) to the branch flow channel (30) is provided as a gap which surrounds the main inner channel (22).

2. Removal device (10) according to claim 1, wherein the at least one branch flow channel (30) extends substantially parallel to the main inner channel (22) over a first distance.

3. Removal device (10) according to claim 2, wherein - when viewed in the direction of the main inner channel (22) - the at least one branch flow channel (30) extends around the circumference of the main inner channel over said first distance, and wherein the at least one return flow channel extends substantially parallel to the main inner channel over a second distance.

4. Removal device (10) according to claim 2, wherein - when viewed in the direction of the main inner channel - the at least one return flow channel extends around the circumference of the main inner channel over said second distance, and wherein a sum of the first distance and second distance is greater than a length of the main inner channel inside the housing.

5. Removal device (10) according to any of the previous claims, wherein - when viewed in the direction of the main inner channel - the branch flow channel and the return flow channel are located on different sides of the main inner channel.

6. Removal device (10) according to any of the previous claims, wherein the branch flow channel comprises an energy dissipation chamber (38) downstream of the branch location.

7. Removal device (10) according to any of the previous claims, wherein the branch flow channel and the return flow channel have substantially a same size and form, but are substantially mirrored with respect to a center point of the main inner channel.

8. Removal device (10) according to any of the previous claims, wherein the branch flow channel has an exit which opens into the quiet zone, wherein - in use - the branch flow exits the branch flow channel and enters the quiet zone, and wherein the return flow channel has an entrance through which in use the branch flow exits the quiet zone and enters the return flow channel, and wherein the exit of the branch flow channel is located closer to the exit than the entrance of the return flow channel, and wherein the entrance of the return flow channel is located closer to the entry than the exit of the branch flow channel.

9. Removal device (10) according to any of the previous claims, wherein the housing, when viewed in the direction of the main inner channel, is asymmetric, wherein a greater part of the housing is provided on one side of the main inner channel, and a smaller part of the housing is provided on an opposite side of the main inner channel, allowing installation of the removal device close to a wall by providing said opposite side at said wall.

10. Removal device (10) according to any of the previous claims, wherein a wall of the housing comprises:
- a first substantially flat dirt discharge mounting zone constructed to allow the mounting of a dirt particles discharge to said housing, wherein the first dirt discharge mounting zone is provided at a lowest point of the housing when the removal device is mounted in a substantially horizontal orientation,
- a second substantially flat dirt discharge mounting zone constructed to allow the mounting of a dirt particles discharge to said housing, wherein the second dirt discharge mounting zone is provided at a lowest point of the housing when the removal device is mounted in a substantially vertical orientation,
and/or
- a first substantially flat gas discharge mounting zone constructed to allow the mounting of a gas discharge to said housing, wherein the first gas discharge mounting zone is provided at a highest point of the housing when the removal device is mounted in a substantially horizontal orientation,
- a second substantially flat gas discharge mounting zone constructed to allow the mounting of a gas discharge to said housing, wherein the second gas discharge mounting zone is provided at a highest point of the housing when the removal device is mounted in a substantially vertical orientation.

11. Removal device (10) according to any of the previous claims, wherein an exit of the branch flow channel and an entrance of the return flow channel are provided on opposite sides of the main inner channel, wherein a branch flow trajectory through the quiet zone which extends between the exit of the branch flow channel and the entrance of the return flow channel crosses the main inner channel, when viewed in a direction perpendicular to the main inner channel.

12. Method of converting an existing removal device (10) for removing dirt particles and/or gas from a flow of liquid in a liquid conduit system into a removal device according to any of the preceding claims, the method comprising:
- providing an existing removal device (10) for removing dirt particles and/or gas from a liquid in a liquid conduit system,
- removing a part of said removal device (10),
- replacing the removed part with a removal member (100), the removal member comprising:
o a main inner channel (22) constructed to guide a greater part of the flow through the removal device, wherein the main inner channel (22) comprises a tube (24) having a cross-section which is smaller than a cross-section of the entry (12) and a diameter which is smaller than a diameter of the entry (12), and wherein the tube (24) extends between a branch location and a merge location,
o at least one branch flow channel (30) defined by a branch flow wall (31), which branches off from the main inner channel (22) at a branch location and extends to a branch flow channel exit (48), the branch flow channel (30) being configured to - in use - branch off a smaller part of the flow,
o at least one return flow channel (60) defined by a return flow channel wall (66), the return flow channel (60) configured for a return flow from the quiet zone back to the main inner channel (22), wherein the return flow channel (60) extends between a return flow channel entrance (64) and a merge point where the return flow channel (60) merges with the main inner channel (22),
wherein an entry (32) to the branch flow channel (30) is provided as a gap which surrounds the main inner channel (22).

## Patentansprüche

1. Entfernungsvorrichtung (10) zum Entfernen von Schmutzpartikeln und/oder Gasblasen aus einer Flüssigkeitsströmung in einem Flüssigkeitsleitungssystem, wobei die Entfernungsvorrichtung (10) umfasst:
- ein Gehäuse (16) mit einem Eingang (12) und einem Ausgang (14), wobei das Gehäuse (16) einen Innenraum (46) innerhalb des Gehäuses (16) definiert,
- einen Hauptinnenkanal (22), der konstruiert ist, um einen größeren Teil der Strömung durch den Innenraum (46) vom Eingang (12) zum Ausgang (14) zu leiten, wobei der Hauptinnenkanal (22) ein Rohr (24) umfasst, das einen Querschnitt aufweist, der kleiner ist als ein Querschnitt des Eingangs (12), und einen Durchmesser, der kleiner ist als ein Durchmesser des Eingangs (12), und wobei sich das Rohr (24) zwischen einer Verzweigungsstelle und einer Zusammenführungsstelle erstreckt,
- mindestens einen Verzweigungsströmungskanal (30), der von dem Hauptinnenkanal (22) an der Verzweigungsstelle abzweigt, wobei der Verzweigungsströmungskanal (30) ausgestaltet ist, um - im Gebrauch - einen kleineren Teil der Hauptströmung abzuzweigen,
- mindestens eine Ruhezone im Innenraum (46), wobei im Gebrauch der mindestens eine Verzweigungsströmungskanal (30) in die mindestens eine Ruhezone mündet, wobei die Ruhezone so konstruiert und angeordnet ist, dass im Gebrauch eine Geschwindigkeit der Flüssigkeit in der mindestens einen Ruhezone niedriger ist als in dem Hauptinnenkanal (22) und niedrig genug, um zu ermöglichen, dass:
∘ Schmutzpartikel sich in der mindestens einen Ruhezone absetzen können und/oder
∘ Gasblasen sich in der mindestens einen Ruhezone bilden und aufsteigen können,
- mindestens einen Rückströmungskanal (60) für eine Rückströmung aus der mindestens einen Ruhezone, wobei der Rückströmungskanal (60) an der Einmündungsstelle in den Hauptinnenkanal (22) mündet,
wobei ein Eingang (32) zum Verzweigungsströmungskanal (30) als Spalt bereitgestellt ist, der den Hauptinnenkanal (22) umgibt.

2. Entfernungsvorrichtung (10) nach Anspruch 1, wobei der mindestens eine Verzweigungsströmungskanal (30) sich im Wesentlichen parallel zu dem Hauptinnenkanal (22) über eine erste Strecke erstreckt.

3. Entfernungsvorrichtung (10) nach Anspruch 2, wobei - in Richtung des Hauptinnenkanals (22) betrachtet - sich der mindestens eine Verzweigungsströmungskanal (30) über die erste Strecke um den Umfang des Hauptinnenkanals herum erstreckt, und wobei sich der mindestens eine Rückströmungskanal über eine zweite Strecke im Wesentlichen parallel zum Hauptinnenkanal erstreckt.

4. Entfernungsvorrichtung (10) nach Anspruch 2, wobei - in Richtung des Hauptinnenkanals betrachtet - sich der mindestens eine Rückströmungskanal um den Umfang des Hauptinnenkanals über die zweite Strecke erstreckt, und wobei eine Summe aus der ersten Strecke und der zweiten Strecke größer ist als eine Länge des Hauptinnenkanals im Inneren des Gehäuses.

5. Entfernungsvorrichtung (10) nach einem der vorhergehenden Ansprüche, wobei - in Richtung des Hauptinnenkanals betrachtet
- der Verzweigungsströmungskanal und der Rückströmungskanal auf unterschiedlichen Seiten des Hauptinnenkanals angeordnet sind.

6. Entfernungsvorrichtung (10) nach einem der vorhergehenden Ansprüche, wobei der Verzweigungsströmungskanal eine Energiedissipationskammer (38) stromabwärts der Verzweigungsstelle umfasst.

7. Entfernungsvorrichtung (10) nach einem der vorhergehenden Ansprüche, wobei der Verzweigungsströmungskanal und der Rückströmungskanal im Wesentlichen die gleiche Größe und Form aufweisen, aber in Bezug auf einen Mittelpunkt des Hauptinnenkanals im Wesentlichen gespiegelt sind.

8. Entfernungsvorrichtung (10) nach einem der vorhergehenden Ansprüche, wobei der Verzweigungsströmungskanal einen Ausgang aufweist, der in die Ruhezone mündet, wobei - im Gebrauch - die Verzweigungsströmung aus dem Verzweigungsströmungskanal austritt und in die Ruhezone eintritt, und wobei der Rückströmungskanal einen Eingang aufweist, durch den im Gebrauch die Verzweigungsströmung aus der Ruhezone austritt und in den Rückströmungskanal eintritt, und wobei der Ausgang des Verzweigungsströmungskanals näher am Ausgang angeordnet ist als der Eingang des Rückströmungskanals, und wobei der Eingang des Rückströmungskanals näher am Eingang angeordnet ist als der Ausgang des Verzweigungsströmungskanals.

9. Entfernungsvorrichtung (10) nach einem der vorhergehenden Ansprüche, wobei das Gehäuse, wenn es in Richtung des Hauptinnenkanals betrachtet wird, asymmetrisch ist, wobei ein größerer Teil des Gehäuses auf einer Seite des Hauptinnenkanals bereitgestellt ist und ein kleinerer Teil des Gehäuses auf einer gegenüberliegenden Seite des Hauptinnenkanals bereitgestellt ist, was die Installation der Entfernungsvorrichtung nahe einer Wand ermöglicht, indem die gegenüberliegende Seite an der Wand bereitgestellt wird.

10. Entfernungsvorrichtung (10) nach einem der vorhergehenden Ansprüche, wobei eine Wand des Gehäuses umfasst:
- eine erste im Wesentlichen flache Schmutzauslassmontagezone, die konstruiert ist, um die Montage einer Schmutzpartikelauslass an dem Gehäuse zu ermöglichen, wobei die erste Schmutzauslassmontagezone an einem tiefsten Punkt des Gehäuses bereitgestellt ist, wenn die Entfernungsvorrichtung in einer im Wesentlichen horizontalen Orientierung montiert ist,
- eine zweite im Wesentlichen flache Schmutzauslassmontagezone, die konstruiert ist, um die Montage einer Schmutzpartikelauslass an dem Gehäuse zu ermöglichen, wobei die zweite Schmutzauslassmontagezone an einem tiefsten Punkt des Gehäuses bereitgestellt ist, wenn die Entfernungsvorrichtung in einer im Wesentlichen vertikalen Orientierung montiert ist,
und/oder
- eine erste im Wesentlichen flache Gasauslassmontagezone, die konstruiert ist, um die Montage eines Gasauslasses an dem Gehäuse zu ermöglichen, wobei die erste Gasauslassmontagezone an einem höchsten Punkt des Gehäuses bereitgestellt ist, wenn die Entfernungsvorrichtung in einer im Wesentlichen horizontalen Orientierung montiert ist,
- eine zweite, im Wesentlichen flache Gasauslassmontagezone, die konstruiert ist, um die Montage eines Gasauslasses an dem Gehäuse zu ermöglichen, wobei die zweite Gasauslassmontagezone an einem höchsten Punkt des Gehäuses bereitgestellt ist, wenn die Entfernungsvorrichtung in einer im Wesentlichen vertikalen Orientierung montiert ist.

11. Entfernungsvorrichtung (10) nach einem der vorhergehenden Ansprüche, wobei ein Ausgang des Verzweigungsströmungskanals und ein Eingang des Rückströmungskanals auf gegenüberliegenden Seiten des Hauptinnenkanals bereitgestellt sind, wobei eine Verzweigungsströmungstrajektorie durch die Ruhezone, die sich zwischen dem Ausgang des Verzweigungsströmungskanals und dem Eingang des Rückströmungskanals erstreckt, den Hauptinnenkanal kreuzt, wenn es in einer Richtung senkrecht zum Hauptinnenkanal betrachtet wird.

12. Verfahren zum Umrüsten einer bestehenden Entfernungsvorrichtung (10) zum Entfernen von Schmutzpartikeln und/oder Gas aus einer Flüssigkeitsströmung in einem Flüssigkeitsleitungssystem in eine Entfernungsvorrichtung nach einem der vorhergehenden Ansprüche, wobei das Verfahren umfasst:
- Bereitstellen einer bestehenden Entfernungsvorrichtung (10) zum Entfernen von Schmutzpartikeln und/oder Gas aus einer Flüssigkeit in einem Flüssigkeitsleitungssystem,
- Entfernen eines Teils der Entfernungsvorrichtung (10),
- Ersetzen des entfernten Teils durch ein Entfernungselement (100), wobei das Entfernungselement umfasst:
o einen Hauptinnenkanal (22), der konstruiert ist, um einen größeren Teil der Strömung durch die Entfernungsvorrichtung zu leiten, wobei der Hauptinnenkanal (22) ein Rohr (24) umfasst, das einen Querschnitt aufweist, der kleiner ist als ein Querschnitt des Eingangs (12), und einen Durchmesser, der kleiner ist als ein Durchmesser des Eingangs (12), und wobei sich das Rohr (24) zwischen einer Verzweigungsstelle und einer Zusammenführungsstelle erstreckt,
∘ mindestens einen Verzweigungsströmungskanal (30), der durch eine Verzweigungsströmungswand (31) definiert ist, die von dem Hauptinnenkanal (22) an einer Verzweigungsstelle abzweigt und sich zu einem Verzweigungsströmungskanalausgang (48) erstreckt, wobei der Verzweigungsströmungskanal (30) ausgebildet ist, um - im Gebrauch - einen kleineren Teil der Strömung abzuzweigen,
∘ mindestens einen Rückströmungskanal (60), der durch eine Rückströmungskanalwand (66) definiert ist, wobei der Rückströmungskanal (60) für eine Rückströmung von der Ruhezone zurück zu dem Hauptinnenkanal (22) ausgestaltet ist, wobei sich der Rückströmungskanal (60) zwischen einem Rückströmungskanaleingang (64) und einem Zusammenführungspunkt erstreckt, an dem der Rückströmungskanal (60) in den Hauptinnenkanal (22) mündet,
wobei ein Eingang (32) zu dem Verzweigungsströmungskanal (30) als ein Spalt bereitgestellt ist, der den Hauptinnenkanal (22) umgibt.

## Revendications

1. Dispositif d'élimination (10) pour éliminer des particules de saleté et/ou des bulles de gaz d'un écoulement de liquide dans un système de conduit de liquide, le dispositif d'élimination (10) comprenant :
un boîtier (16) ayant une entrée (12) et une sortie (14), le boîtier (16) définissant un espace interne (46) dans le boîtier (16),
un canal interne principal (22) construit pour guider une plus grande partie de l'écoulement à travers l'espace interne (46), de l'entrée (12) à la sortie (14), dans lequel le canal interne principal (22) comprend un tube (24) ayant une section transversale qui est inférieure à une section transversale de l'entrée (12) et un diamètre qui est inférieur à un diamètre de l'entrée (12), et dans lequel le tube (24) s'étend entre un emplacement de dérivation et un emplacement de fusion,
au moins un canal d'écoulement de dérivation (30), qui dérive du canal interne principal (22) à l'emplacement de dérivation, le canal d'écoulement de dérivation (30) étant configuré pour - à l'usage - dériver une plus petite partie de l'écoulement principal,
au moins une zone tranquille dans l'espace interne (46), dans lequel, à l'usage, le au moins un canal d'écoulement de dérivation (30) se décharge dans la au moins une zone tranquille, la zone tranquille étant construite et agencée de sorte qu'à l'usage, une vitesse du liquide dans la au moins une zone tranquille est inférieure à celle dans le canal interne principal (22) et assez faible pour permettre :
aux particules de saleté de s'installer dans la au moins une zone tranquille et/ou
aux bulles de gaz de se former et de monter dans la au moins une zone tranquille,
au moins un canal d'écoulement de retour (60) pour un écoulement de retour de la au moins une zone tranquille, dans lequel le canal d'écoulement de retour (60) fusionne avec le canal interne principal (22) à l'emplacement de fusion,
dans lequel une entrée (32) dans le canal d'écoulement de dérivation (30) est prévue en tant qu'espace qui entoure le canal interne principal (22).

2. Dispositif d'élimination (10) selon la revendication 1, dans lequel le au moins un canal d'écoulement de dérivation (30) s'étend sensiblement parallèlement au canal interne principal (22) sur une première distance.

3. Dispositif d'élimination (10) selon la revendication 2, dans lequel - lorsqu'il est observé dans la direction du canal interne principal (22) - le au moins un canal d'écoulement de dérivation (30) s'étend autour de la circonférence du canal interne principal sur ladite première distance, et dans lequel le au moins un canal d'écoulement de retour s'étend sensiblement parallèlement au canal interne principal sur une seconde distance.

4. Dispositif d'élimination (10) selon la revendication 2, dans lequel - lorsqu'il est observé dans la direction du canal interne principal - le au moins un canal d'écoulement de retour s'étend autour de la circonférence du canal interne principal sur ladite seconde distance, et dans lequel une somme de la première distance et de la seconde distance est supérieure à une longueur du canal interne principal à l'intérieur du boîtier.

5. Dispositif d'élimination (10) selon l'une quelconque des revendications précédentes, dans lequel - lorsqu'il est observé dans la direction du canal interne principal - le canal d'écoulement de dérivation et le canal d'écoulement de retour sont positionnés sur des côtés différents du canal interne principal.

6. Dispositif d'élimination (10) selon l'une quelconque des revendications précédentes, dans lequel le canal d'écoulement de dérivation comprend une chambre de dissipation d'énergie (38) en aval de l'emplacement de dérivation.

7. Dispositif d'élimination (10) selon l'une quelconque des revendications précédentes, dans lequel le canal d'écoulement de dérivation et le canal d'écoulement de retour ont sensiblement une même taille et une même forme, mais sont sensiblement en miroir par rapport à un point central du canal interne principal.

8. Dispositif d'élimination (10) selon l'une quelconque des revendications précédents, dans lequel le canal d'écoulement de dérivation a une sortie qui s'ouvre dans la zone tranquille, dans lequel - à l'usage - l'écoulement de dérivation sort du canal d'écoulement de dérivation et entre dans la zone tranquille, et dans lequel le canal d'écoulement de retour a une entrée à travers laquelle, à l'usage, l'écoulement de dérivation sort de la zone tranquille et pénètre dans le canal d'écoulement de retour, et dans lequel la sortie du canal d'écoulement de dérivation est positionnée plus à proximité de la sortie que l'entrée du canal d'écoulement de dérivation, et dans lequel l'entrée du canal d'écoulement de retour est positionnée plus à proximité de l'entrée que la sortie du canal d'écoulement de dérivation.

9. Dispositif d'élimination (10) selon l'une quelconque des revendications précédentes, dans lequel le boîtier, lorsqu'il est observé dans la direction du canal interne principal, est asymétrique, dans lequel une plus grande partie du boîtier est prévue sur un côté du canal interne principal, et une plus petite partie du boîtier est prévue sur un côté opposé du canal interne principal, permettant l'installation du dispositif d'élimination à proximité d'une paroi en prévoyant ledit côté opposé au niveau de ladite paroi.

10. Dispositif d'élimination (10) selon l'une quelconque des revendications précédentes, dans lequel une paroi du boîtier comprend :
une première zone de montage de décharge de saleté sensiblement plate construite pour permettre le montage d'une décharge de particules de saleté sur ledit boîtier, dans lequel la première zone de montage de décharge de saleté est prévue au niveau du point le plus bas du boîtier lorsque le dispositif d'élimination est monté dans une orientation sensiblement horizontale,
une seconde zone de montage de décharge de saleté sensiblement plate construite pour permettre le montage d'une décharge de particules de saleté sur ledit boîtier, dans lequel la seconde zone de montage de décharge de saleté est prévue au niveau du point le plus bas du boîtier lorsque le dispositif d'élimination est monté dans une orientation sensiblement verticale,
et/ou
une première zone de montage de décharge de gaz sensiblement plate construite pour permettre le montage d'une décharge de gaz sur ledit boîtier, dans lequel la première zone de montage de décharge de gaz est prévue au niveau du point le plus haut du boîtier, lorsque le dispositif d'élimination est monté dans une orientation sensiblement horizontale,
une seconde zone de montage de décharge de gaz sensiblement plate construite pour permettre le montage d'une décharge de gaz sur ledit boîtier, dans lequel la seconde zone de montage de décharge de gaz est prévue au niveau du point le plus haut du boîtier lorsque le dispositif d'élimination est monté dans une orientation sensiblement verticale.

11. Dispositif d'élimination (10) selon l'une quelconque des revendications précédentes, dans lequel une sortie du canal d'écoulement de dérivation et une entrée du canal d'écoulement de retour sont prévues sur les côtés opposés du canal interne principal, dans lequel une trajectoire d'écoulement de dérivation à travers la zone tranquille qui s'étend entre la sortie du canal d'écoulement de dérivation et l'entrée du canal d'écoulement de retour traverse le canal interne principal, lorsqu'il est observé dans une direction perpendiculaire au canal interne principal.

12. Procédé pour convertir un dispositif d'élimination (10) existant pour éliminer des particules de saleté et/ou du gaz d'un écoulement de liquide dans un système de conduit de liquide en un dispositif d'élimination selon l'une quelconque des revendications précédentes, le procédé comprenant les étapes consistant à :
prévoir un dispositif d'élimination (10) existant pour retirer des particules de saleté et/ou du gaz d'un liquide dans un système de conduit de liquide,
retirer une partie dudit dispositif d'élimination (10),
remplacer la partie retirée par un élément d'élimination (100), l'élément d'élimination comprenant :
un canal interne principal (22) construit pour guider une plus grande partie de l'écoulement à travers le dispositif d'élimination, dans lequel le canal interne principal (22) comprend un tube (24) ayant une section transversale qui est inférieure à une section transversale de l'entrée (12) et un diamètre qui est inférieur à un diamètre de l'entrée (12), et dans lequel le tube (24) s'étend entre un emplacement de dérivation et un emplacement de fusion,
au moins un canal d'écoulement de dérivation (30) défini par une paroi d'écoulement de dérivation (31), qui dérive du canal interne principal (22) au niveau d'un emplacement de dérivation et s'étend vers une sortie (48) de canal d'écoulement de dérivation, le canal d'écoulement de dérivation (30) étant configuré pour - à l'usage - dériver une plus petite partie de l'écoulement,
au moins un canal d'écoulement de retour (60) défini par une paroi (66) de canal d'écoulement de retour, le canal d'écoulement de retour (60) étant configuré pour un écoulement de retour de la zone tranquille à nouveau dans le canal interne principal (22), dans lequel le canal d'écoulement de retour (60) s'étend entre une entrée de canal d'écoulement de retour (64) et un point de fusion où le canal d'écoulement de retour (60) fusionne avec le canal interne principal (22),
dans lequel une entrée (32) dans le canal d'écoulement de dérivation (30) est prévue en tant qu'espace qui entoure le canal interne principal (22).
